# EUROPEAN PATENT SPECIFICATION

(11) **EP 3 076 674 B1**
(45) Date of publication and mention of the grant of the patent: **05.09.2018**
(21) Application number: 14891479.9
(22) Date of filing: 08.05.2014
(51) Int. Cl.: H04N 19/87, H04N 17/00

(54) **VIDEO QUALITY DETECTION METHOD AND DEVICE**
VERFAHREN UND VORRICHTUNG ZUR ERKENNUNG DER VIDEOQUALITÄT
PROCÉDÉ ET DISPOSITIF DE DÉTECTION DE QUALITÉ VIDÉO

(43) Date of publication of application: 05.10.2016
(73) Proprietor: Huawei Device (Dongguan) Co., Ltd., Dongguan, Guangdong, PRC, 523808 (CN)
(72) Inventor: LIU, Hengbing, Shenzhen, Guangdong 518129 (CN); YU, Dawei, Shenzhen, Guangdong 518129 (CN); ZHANG, Xuan, Shenzhen, Guangdong 518129 (CN); WANG, Xingqian, Shenzhen, Guangdong 518129 (CN)
(74) Representative: Körber, Martin Hans
(86) International application number: PCT/CN2014/077008
(87) International publication number: WO 2015/168893

(56) References cited:
- WO-A2-2009/007133
- CN-A- 102 542 282
- CN-A- 102 685 545
- CN-A- 102 740 121
- US-A1- 2013 297 743
- ALINA KARWOWSKA-LAMPARSKA: "Revision of Recommendation J.144 - Objective perceptual video quality measurement techniques for digital cable television in the presence of a full reference; TD 092", ITU-T DRAFT STUDY PERIOD 2001-2004, INTERNATIONAL TELECOMMUNICATION UNION, GENEVA ; CH, vol. STUDY GROUP 9, 15 January 2004 (2004-01-15), pages 1-164, XP017424132,

## Description

### TECHNICAL FIELD

The present invention relates to the field of communications technologies, and in particular, to a video quality detection method and apparatus.

### BACKGROUND

Video quality is an important detection item of a related media product. At present, video quality detection is a focus of research in the industry and is mainly categorized as two manners: active video quality detection (hereinafter referred to as active detection) and passive video quality detection (hereinafter referred to as passive detection). The active detection refers to a video quality detection manner that includes a reference source for video comparison, and the passive detection refers to a video quality detection manner that does not include a reference source for video comparison.
For example, US 2013/0297743A1 refers to a computer readable medium and a method for bandwidth management, the method may include receiving or generating (a) video entity quality information for multiple sets of video entities, each set of video entities comprises video entities that belong to different versions of a same video stream, (b) user device screen size information for each user device out of multiple users devices, (c) user device profile information for each user out of multiple users, and (d) bandwidth constraints relating to bandwidth available for transmission of selected video entities to the user devices; wherein each user of the multiple users is associated with a user device of the multiple users devices; selecting for each user device a selected video entity based on at least (a) the video entity quality information, (b) the user device screen size information, (c) the requested video profile information, and (d) the bandwidth constraints; and, streaming to the multiple user devices from multiple selected video entities.
Further, WO 2009/007133A2 refers to a method and an apparatus for determining the visual quality of processed visual information such as compressed images or videos.

In the prior art, mainstream active detection measures video quality by using a related indicator, and therefore a reference threshold needs to be set for the related indicator. However, in an actual application of video quality detection, a specific difference exists in thresholds chosen for different media products and different video sources. In addition, in some cases, a detection indicator is not necessarily completely consistent with video quality perceived by human eyes. Therefore, detection precision and practicability of the active detection in which video quality is detected by using a related indicator are low. In the prior art, the active detection performs detection on a video mainly by using a video quality detection instrument. Because detection performed on a video by the video quality detection instrument is comparison detection performed in a pairwise comparison manner, one video quality detection instrument can support simultaneous detection on a limited quantity of media products. If large-scale detection needs to be performed on media products, costs of video quality detection increase.

In the prior art, a passive detection algorithm mainly matches an abnormality by analyzing a feature of a video image, and there is neither a passive detection instrument nor a mainstream passive detection algorithm in the prior art, and therefore a detection scenario of passive detection is limited. In addition, no method or instrument can simultaneously support the active and the passive two detection manners in the prior art. Video quality detection uses either the active detection manner or the passive detection manner. A video quality detection manner is onefold, video quality detection precision cannot be ensured, and user experience effect is low.

### SUMMARY

Embodiments of the present invention provide a video quality detection method and apparatus, with which detection can be simultaneously performed on video frames of multiple media products, where active video quality detection or passive video quality detection may be chosen to be performed on video frame data, which can enhance diversity of a video quality detection manner, ensure video quality detection precision, and improve user experience of video quality detection.

In a first aspect a video quality detection method performed by a video quality detection apparatus is provided, the method comprising:
- collecting video frame data, wherein the video frame data come from at least two media files;
- choosing to perform an active video quality detection on the video frame data when the video frame data are video frame data of a customized video, wherein the active video quality detection is a full-reference video quality estimation method and the customized video is a video having a source video;
- choosing to perform a passive video quality detection on the video frame data when the video frame data are video frame data of a streaming media video, wherein the passive video quality detection is a non-reference video quality estimation method and the streaming media video is a video having no source video,
- in case that the active video quality detection is chosen, performing the active video quality detection on the video frame data according to a video processing algorithm of the active video quality detection,
   wherein the performing the active video quality detection on the video frame data according to the video processing algorithm of the active video quality detection comprises:
   ∘ acquiring a target image of the video frame data, and performing Gaussian blur processing on the target image and a preset reference image;
   ∘ performing gray-scale processing on the target image and the reference image that are obtained from the Gaussian blur processing such that the impact of a color signal is removed;
   ∘ performing synthesis processing on the target image and the reference image that are obtained from the gray-scale processing, thereby acquiring a difference image of the target image and the reference image;
   ∘ performing black and white binary processing on the difference image, and if a pixel value of the difference image is greater than a preset threshold, setting the pixel value to a first pixel value, or if the pixel value of the difference image is not greater than the preset threshold, setting the pixel value to a second pixel value; and
   ∘ acquiring a pixel whose pixel value is the first pixel value, so as to obtain abnormal video frame data;
- in case that the passive video quality detection is chosen, performing the passive video quality detection on the video frame data according to a video processing algorithm of the passive video quality detection; and
- in case the active video quality detection is performed, sending a first quality detection report of the abnormal video frame data of the active video quality detection to a video frame abnormality processing module
- in case the passive video quality detection is performed, acquiring abnormal video frame data of the passive video quality detection based on the passive video quality detection, and sending a second quality detection report of the abnormal video frame data of the passive video quality detection to the video frame abnormality processing module.

In a second aspect a video quality detection apparatus configured to perform the above method is provided.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a first embodiment of a video quality detection method according to an embodiment of the present invention;
FIG. 2 is a schematic flowchart of a second embodiment of a video quality detection method according to an embodiment of the present invention;
FIG. 3 is a schematic flowchart of a third embodiment of a video quality detection method according to an embodiment of the present invention;
FIG. 4 is a schematic structural diagram of a first embodiment of a video quality detection apparatus according to an embodiment of the present invention;
FIG. 5 is a schematic structural diagram of a second embodiment of a video quality detection apparatus according to an embodiment of the present invention; and
FIG. 6 is a schematic structural diagram of a third embodiment of a video quality detection apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

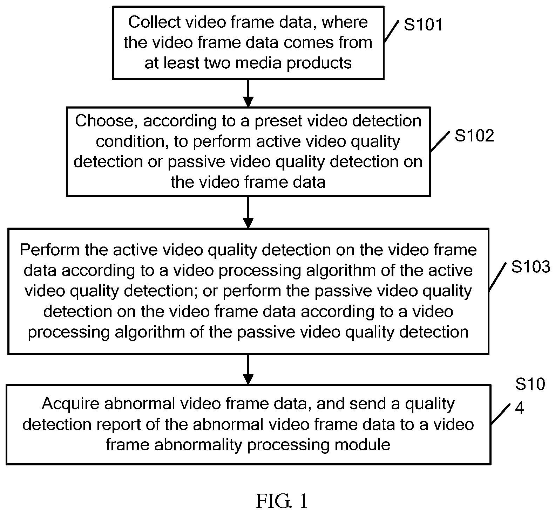

Referring to FIG. 1, FIG. 1 is a schematic flowchart of a first embodiment of a video quality detection method according to an embodiment of the present invention. The video quality detection method described in this embodiment includes the following steps:

S101. Collect video frame data, where the video frame data comes from at least two media products.

In a specific implementation, a video quality detection platform described in this embodiment of the present invention may be a workstation server, that is, the video quality detection method described in this embodiment of the present invention may be executed by a workstation server, and a video quality detection apparatus described in this embodiment of the present invention may be a workstation server.

In some feasible implementation manners, to-be-detected video frame data needs to be collected first, and in the video quality detection method described in this embodiment of the present invention, detection may be simultaneously performed on multiple channels (that is, at least two channels) of video frame data, that is, the video frame data may be collected from multiple media files. In a specific implementation, the video frame data described in this embodiment of the present invention may include a type, such as video frame data of a customized video or video frame data of a streaming media video, where the foregoing customized video may be specifically a video having a video source, and may include a recorded video, a produced video, or the like, and an active video quality detection manner may be used to perform quality detection on the video having a video source; the foregoing streaming media video is a video without a video source, and a passive video quality detection manner may be used to perform quality detection on the video without a video source. A type included by the foregoing customized video is merely exemplary but not exhaustive, and includes but is not limited to the foregoing type; this embodiment of the present invention sets no limitation to a detection manner of the customized video or a detection manner of the streaming media video.

S102. Choose, according to a preset video detection condition, to perform active video quality detection or passive video quality detection on the video frame data.

S103. Perform the active video quality detection on the video frame data according to a video processing algorithm of the active video quality detection; or perform the passive video quality detection on the video frame data according to a video processing algorithm of the passive video quality detection.

In some feasible implementation manners, when video quality detection is performed, the active video quality detection or the passive video quality detection may be chosen, directly according to a type of the video frame data, to be performed on the video frame data. Specifically, when the collected video frame data is the foregoing video frame data of the customized video, the active video quality detection may be chosen to be performed on the video frame data; or when the collected video frame data is the foregoing video frame data of the streaming media video, the passive video quality detection may be chosen to be performed on the video frame data. In a specific implementation, because a user has a precision requirement for video quality detection, that is, the user may determine video quality detection precision according to an actual requirement; after the video quality detection precision is determined, a corresponding video quality detection manner may be chosen with reference to the type of the video frame data. Specifically, the user may preset detection precision of video quality detection, where the detection precision may include first detection precision, second detection precision, and the like; after the video quality detection precision is set, the active video quality detection or the passive video quality detection may be chosen to be performed on the video frame data with reference to the type of the collected video frame data. For example, when the collected video frame data is video frame data of the customized video having a video source, and the preset video quality detection precision is the first detection precision, the active video quality detection may be chosen to be performed on the foregoing customized video, and then the active video quality detection may be performed on the foregoing collected video frame data according to the video processing algorithm of the active video quality detection, so as to acquire the abnormal video frame data; or when the collected video frame data is video frame data of the streaming media video without a video source, and the preset video quality detection precision is the second detection precision, the passive video quality detection may be chosen to be performed on the foregoing streaming media video, and then the passive video quality detection may be performed on the foregoing collected video frame data according to the video processing algorithm of the passive video quality detection, so as to acquire the abnormal video frame data. In this embodiment of the present invention, a manner of choosing, according to a preset video detection condition, to perform the active video quality detection or the passive video quality detection on the collected video frame data may be either of the two manners described above, that is, choosing directly according to the type of the video frame data, or choosing according to the type of the video frame data and the video quality detection precision, which is not limited herein.

S104. Acquire abnormal video frame data, and send a quality detection report of the abnormal video frame data to a video frame abnormality processing module.

In some feasible implementation manners, after the video quality detection is performed on the collected video frame data, abnormal video frame data may be acquired, and information, such as time and log information, about occurrence of a video abnormality may be recorded and be arranged into the quality detection report of the abnormal video frame data, and then the quality detection report of the abnormal video frame data may be sent to the video frame abnormality processing module, so that the video frame abnormality processing module processes the abnormal video frame data.

In this embodiment of the present invention, video frame data obtained from multiple decoded media files may be collected simultaneously, that is, video quality detection may be simultaneously performed on the video frame data obtained from the multiple decoded media files, and active video quality detection or passive video quality detection may further be chosen to be performed on the video frame data according to a type of the video frame data or preset video quality detection precision, and then the video quality detection may be performed on the video frame data according to an active video quality detection algorithm or a passive video quality detection algorithm, so as to acquire abnormal video frame data. This embodiment of the present invention can simultaneously support the active video quality detection or the passive video quality detection, which enriches a video quality detection manner, enhances flexibility of video quality detection, ensures video quality detection precision, and improves user experience of video quality detection.

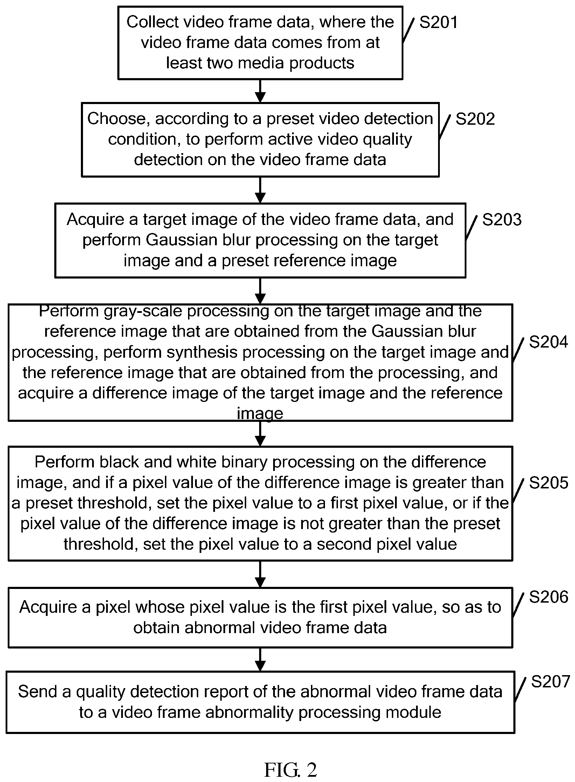

Referring to FIG. 2, FIG. 2 is a schematic flowchart of a second embodiment of a video quality detection method according to an embodiment of the present invention. The video quality detection method described in this embodiment includes the following steps:
S201. Collect video frame data, where the video frame data comes from at least two media products.

In a specific implementation, a video quality detection platform described in this embodiment of the present invention may be a workstation server, that is, the video quality detection method described in this embodiment of the present invention may be executed by a workstation server, and a video quality detection apparatus described in this embodiment of the present invention may be a workstation server.

In some feasible implementation manners, to-be-detected video frame data needs to be collected first, and in the video quality detection method described in this embodiment of the present invention, detection may be simultaneously performed on multiple channels (that is, at least two channels) of video frame data, that is, the video frame data may be collected from multiple media files. In a specific implementation, the video frame data described in this embodiment of the present invention may include a type, such as video frame data of a customized video or video frame data of a streaming media video, where the foregoing customized video may be specifically a video having a video source, and may include a recorded video, a produced video, or the like, and an active video quality detection manner may be used to perform quality detection on the video having a video source; the foregoing streaming media video is a video without a video source, and a passive video quality detection manner may be used to perform quality detection on the video without a video source. A type included by the foregoing customized video is merely exemplary but not exhaustive, and includes but is not limited to the foregoing type; this embodiment of the present invention sets no limitation to a detection manner of the customized video or a detection manner of the streaming media video.

S202. Choose, according to a preset video detection condition, to perform active video quality detection on the video frame data.

S203. Acquire a target image of the video frame data, and perform Gaussian blur processing on the target image and a preset reference image.

S204. Perform gray-scale processing on the target image and the reference image that are obtained from the Gaussian blur processing, perform synthesis processing on the target image and the reference image that are obtained from the processing, and acquire a difference image of the target image and the reference image.

S205. Perform black and white binary processing on the difference image, and if a pixel value of the difference image is greater than a preset threshold, set the pixel value to a first pixel value, or if the pixel value of the difference image is not greater than the preset threshold, set the pixel value to a second pixel value.

S206. Acquire a pixel whose pixel value is the first pixel value, so as to obtain abnormal video frame data.

In some feasible implementation manners, when video quality detection is performed, the active video quality detection may be chosen, directly according to a type of the video frame data, to be performed on the video frame data. Specifically, when the collected video frame data is the foregoing video frame data of the customized video, the active video quality detection may be chosen to be performed on the video frame data. In a specific implementation, because a user has a precision requirement for video quality detection, that is, the user may determine video quality detection precision according to an actual requirement; after the video quality detection precision is determined, a corresponding video quality detection manner may be chosen with reference to the type of the video frame data. Specifically, the user may preset detection precision of video quality detection, where the detection precision may include first detection precision, second detection precision, and the like; after the video quality detection precision is set, the active video quality detection or the passive video quality detection may be chosen to be performed on the video frame data with reference to the type of the collected video frame data. In a specific implementation, when the collected video frame data is video frame data of a customized video having a video source, and the foregoing preset video quality detection precision is the first detection precision, the active video quality detection may be chosen to be performed on the foregoing customized video, and then the active video quality detection may be performed on the foregoing collected video frame data according to the video processing algorithm of the active video quality detection, so as to acquire the abnormal video frame data is acquired. In this embodiment of the present invention, a manner of choosing, according to a preset video detection condition, to perform the active video quality detection on the collected video frame data may be either of the two manners described above, that is, choosing directly according to the type of the video frame data, or choosing according to the type of the video frame data and the video quality detection precision, which is not limited herein.

In this embodiment of the present invention, the video processing algorithm of the foregoing active video quality detection includes: a Gaussian blur processing algorithm, a gray-scale processing algorithm, a synthesis processing algorithm, and the like, where the foregoing processing algorithms are named according to a specific processing action, and are not specific algorithm names but a kind of processing algorithm, that is, all algorithms that can implement the Gaussian blur processing on the target image and the reference image may be referred to as the Gaussian blur processing algorithm, all algorithms that can implement the gray-scale processing on the target image and the reference image may be referred to as the gray-scale processing algorithm, all algorithms that can implement the synthesis processing on the target image and the reference image may be referred to as the synthesis processing algorithm, and so on.

In some feasible implementation manners, when the active video quality detection is performed on the collected video frame data, the target image of the video frame data is acquired first, and the Gaussian blur processing is performed on the foregoing target image and the preset reference image, where the foregoing target image may be specifically a to-be-detected image in the foregoing video frame data. Specifically, in this embodiment of the present invention, before quality detection is performed on the target image, the reference image may be further created first, that is, after the video frame data is collected, a standard reference source may be created according to the collected video frame data, so as to obtain the reference image, and then the active video quality detection may be performed on the collected video frame data according to the foregoing reference image. In a specific implementation, for two images, of a same frame, that are collected at different moments, a difference between the images may be not perceived by human eyes observation; however, by using pixel comparison, it may be found that a difference exists in data of the two images. The Gaussian blur processing can smooth an image edge, and remove impact of zigzagging, thereby highlighting a main feature of the image. By performing the Gaussian blur processing on the target image and the reference image, a zigzag effect of an image edge can be removed, that is, edge data that has little impact on the observation by human eyes may be removed, so that detection may be further performed on the target image and the reference image to search for the abnormal video frame data. Specifically, after the Gaussian blur processing is performed on the target image and the reference image, the gray-scale processing may be performed on a target image and a reference image that are obtained from the processing. Because a human visual system has a higher degree of sensitivity to brightness than that to colors, for a common video, color details do not cause a perceptible loss. Performing the gray-scale processing on the target image and the reference image can remove impact of a color signal, so that a difference feature of the target image and the reference image can be better acquired, so that the abnormal video frame data is acquired. After the gray-scale processing is performed on the target image and the reference image according to the foregoing method, the synthesis processing may be performed on a target image and a reference image that are obtained from the processing, so that the difference image of the target image and the reference image is acquired, and the black and white binary processing may be further performed on the difference image. In a specific implementation, when the pixel value of the image is greater than a threshold (that is, the preset threshold), it may be perceived by human eyes that a difference exists between the target image and the reference image; therefore, after the synthesis processing is performed on the target image and the reference image, the difference between the two images may be obtained. Specifically, an absolute value of the pixel value may be set when the difference between the two images is acquired, so that a value range of the pixel value is 0 to 255 (because a component value of an image pixel ranges from 0 to 255, the value range of the foregoing pixel value may be 0 to 255). After the difference image is acquired by performing the synthesis processing on the target image and the reference image, the black and white binary processing may be performed on the difference image. Specifically, when the pixel value of the foregoing difference image is greater than the preset threshold, the pixel value may be set to the first pixel value (that is, the pixel value may be set to a maximum value, for example, 255); otherwise, the pixel value may be set to the second pixel value (that is, the pixel value may be set to a minimum value, for example, 0), so as to better differentiate an abnormal pixel from a normal pixel. After the black and white binary processing is performed on the difference image, and the pixel value of the difference image is set to the first pixel value or the second pixel value, a pixel whose pixel value is the first pixel value may be acquired, so as to obtain the abnormal video frame data.

S207. Send a quality detection report of the abnormal video frame data to a video frame abnormality processing module.

In some feasible implementation manners, after the video quality detection is performed on the collected video frame data, abnormal video frame data may be acquired, and information, such as time and log information, about occurrence of a video abnormality may be recorded and be arranged into the quality detection report of the abnormal video frame data, and then the quality detection report of the abnormal video frame data may be sent to the video frame abnormality processing module, so that the video frame abnormality processing module processes the abnormal video frame data.

In this embodiment of the present invention, video frame data obtained from multiple decoded media files may be collected simultaneously, that is, video quality detection may be simultaneously performed on the video frame data obtained from the multiple decoded media files, and active video quality detection may further be chosen to be performed on the video frame data according to a type of the video frame data or preset video quality detection precision, and then the video quality detection may be performed on the video frame data according to an active video quality detection algorithm, so as to acquire abnormal video frame data, which enhances flexibility of video quality detection, ensures video quality detection precision, and improves user experience of video quality detection.

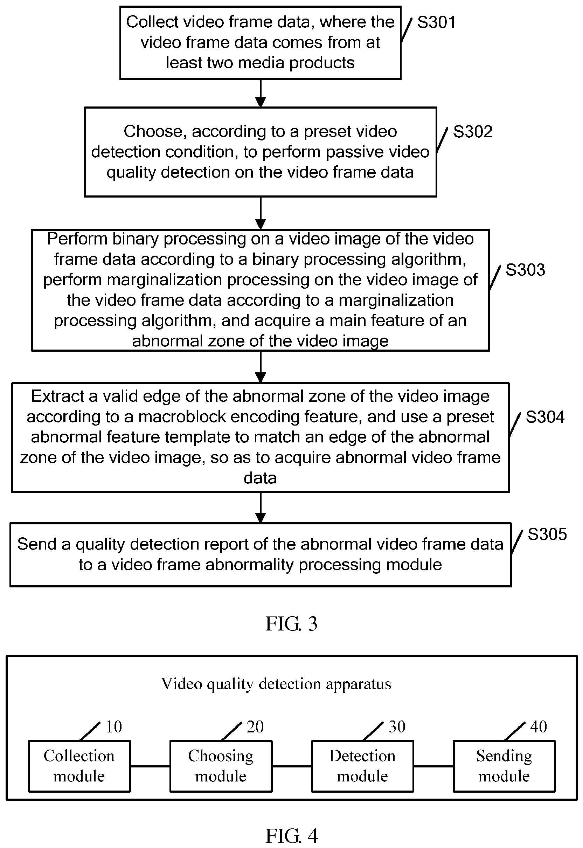

Referring to FIG. 3, FIG. 3 is a schematic flowchart of a third embodiment of a video quality detection method according to an embodiment of the present invention. The video quality detection method described in this embodiment includes the following steps:
S301. Collect video frame data, where the video frame data comes from at least two media products.

In a specific implementation, a video quality detection platform described in this embodiment of the present invention may be a workstation server, that is, the video quality detection method described in this embodiment of the present invention may be executed by a workstation server, and a video quality detection apparatus described in this embodiment of the present invention may be a workstation server.

In some feasible implementation manners, to-be-detected video frame data needs to be collected first, and in the video quality detection method described in this embodiment of the present invention, detection may be simultaneously performed on multiple channels (that is, at least two channels) of video frame data, that is, the video frame data may be collected from multiple media files. In a specific implementation, the video frame data described in this embodiment of the present invention may include a type, such as video frame data of a customized video or video frame data of a streaming media video, where the foregoing customized video may be specifically a video having a video source, and may include a recorded video, a produced video, or the like, and an active video quality detection manner may be used to perform quality detection on the video having a video source; the foregoing streaming media video is a video without a video source, and a passive video quality detection manner may be used to perform quality detection on the video without a video source. A type included by the foregoing customized video is merely exemplary but not exhaustive, and includes but is not limited to the foregoing type; this embodiment of the present invention sets no limitation to a detection manner of the customized video or a detection manner of the streaming media video.

S302. Choose, according to a preset video detection condition, to perform passive video quality detection on the video frame data.

S303. Perform binary processing on a video image of the video frame data according to the binary processing algorithm, perform marginalization processing on the video image of the video frame data according to the marginalization processing algorithm, and acquire a main feature of an abnormal zone of the video image.

S304. Extract a valid edge of the abnormal zone of the video image according to a macroblock encoding feature, and use the preset abnormal feature template to match an edge of the abnormal zone of the video image, so as to acquire abnormal video frame data.

In some feasible implementation manners, when video quality detection is performed, the passive video quality detection may be chosen, according to a type of the video frame data, to be performed on the video frame data directly. Specifically, when the collected video frame data is the foregoing video frame data of the streaming media video, the passive video quality detection may be chosen to be performed on the video frame data. In a specific implementation, because a user has a precision requirement for video quality detection, that is, the user may determine video quality detection precision according to an actual requirement; after the video quality detection precision is determined, a corresponding video quality detection manner may be chosen with reference to the type of the video frame data. Specifically, the user may preset detection precision of video quality detection, where the detection precision may include first detection precision, second detection precision, and the like; after the video quality detection precision is set, the active video quality detection may be chosen to be performed or the passive video quality detection on the video frame data with reference to the type of the collected video frame data. For example, when the collected video frame data is video frame data of the streaming media video without a video source, and the preset video quality detection precision is the second detection precision, the passive video quality detection may be chosen to be performed on the foregoing streaming media video, and then the passive video quality detection may be performed on the foregoing collected video frame data according to a video processing algorithm of the passive video quality detection, so as to acquire the abnormal video frame data. In this embodiment of the present invention, a manner of choosing, according to a preset video detection condition, to perform the passive video quality detection on the collected video frame data may be either of the two manners described above, that is, choosing directly according to the type of the video frame data, or choosing according to the type of the video frame data and the video quality detection precision, which is not limited herein.

In this embodiment of the present invention, the video processing algorithm of the foregoing passive video quality detection includes: the binary processing algorithm, the marginalization processing algorithm, macroblock encoding, and the like, where the foregoing processing algorithms are named according to a specific processing action, and are not specific algorithm names but a kind of processing algorithm, that is, all algorithms that can implement the binary processing on the video image may be referred to as the binary processing algorithm, all algorithms that can implement the marginalization processing on the video image may be referred to as the marginalization processing algorithm, and so on.

In some feasible implementation manners, when the passive video quality detection is performed on the collected video frame data, the binary processing may first be performed on the video image of the collected video frame data according to the binary processing algorithm, the marginalization processing may be performed on the video image of the foregoing video frame data according to the foregoing marginalization processing algorithm, and the main feature of the abnormal zone of the video image may be acquired, where the main feature of the abnormal zone of the foregoing video image includes: pixelation, artifacts, a black screen, frame freezing, and the like. This embodiment uses pixelation as an example to give a detailed description on the video quality detection method described in the embodiments of the present invention. For example, when a pixelation abnormality exists in the video image of the collected video frame data, because the pixelation abnormality may be embodied into a regular square or rectangular, performing the binary and marginalization processing on the video image can remove impact of a pixelation area, thereby highlighting a main feature of the pixelation area. After the main feature of the pixelation is highlighted by performing the binary processing and the marginalization processing on the video image of the collected video frame data, an edge of the pixelation may be further extracted. Specifically, it can be learnt by analyzing the macroblock encoding feature that the edge of the pixelation may be a square or rectangular with a fixed side length, instead of an irregular shape, such as a slash, an arc, or the like, and the edge only appears on a specific row, and therefore, the valid edge of the abnormal zone of the video image may be extracted according to the macroblock encoding feature, that is, the edge of the pixelation may be extracted. In a specific implementation, after the valid edge of the abnormal zone of the video image is extracted by analyzing the macroblock encoding feature, a preset abnormal feature template may be used to match the edge of the abnormal zone of the foregoing video image, so as to acquire the abnormal video frame data. For example, because the edge of the pixelation has a regular shape, a fixed template may be used to perform the matching after the edge of the pixelation is extracted. If a quantity of areas successfully matched with the template is greater than a specified quantity, it may be considered that pixelation exists in the video image, and then the foregoing video image in which pixelation exists may be set as an abnormal video image, and the abnormal video frame data may be obtained according to the foregoing video image.

S305. Send a quality detection report of the abnormal video frame data to a video frame abnormality processing module.

In some feasible implementation manners, after the video quality detection is performed on the collected video frame data, abnormal video frame data may be acquired, and information, such as time and log information, about occurrence of a video abnormality may be recorded and be arranged into the quality detection report of the abnormal video frame data, and then the quality detection report of the abnormal video frame data may be sent to the video frame abnormality processing module, so that the video frame abnormality processing module processes the abnormal video frame data.

In this embodiment of the present invention, video frame data obtained from multiple decoded media files may be collected simultaneously, that is, video quality detection may be simultaneously performed on the video frame data obtained from the multiple decoded media files, and passive video quality detection may be chosen, according to a type of the video frame data or preset video quality detection precision, to be performed on the video frame data, and then the video quality detection may be performed on the video frame data according to a passive video quality detection algorithm, so as to acquire abnormal video frame data. This embodiment of the present invention can support the passive video quality detection, which enhances scenario practicability of video quality detection, ensures video quality detection precision, and improves user experience of video quality detection.

Referring to FIG. 4, FIG. 4 is a schematic structural diagram of a first embodiment of a video quality detection apparatus according to an embodiment of the present invention. The video quality detection apparatus described in this embodiment of the present invention includes:
a collection module 10, configured to collect video frame data, where the video frame data comes from at least two media products;
a choosing module 20, configured to choose, according to a preset video detection condition, to perform active video quality detection or passive video quality detection on the video frame data;
a detection module 30, configured to perform the active video quality detection on the video frame data according to a video processing algorithm of the active video quality detection; or perform the passive video quality detection on the video frame data according to a video processing algorithm of the passive video quality detection; and
a sending module 40, configured to acquire abnormal video frame data, and send a quality detection report of the abnormal video frame data to a video frame abnormality processing module.

In a specific implementation, the video quality detection apparatus described in this embodiment of the present invention may be specifically a workstation server.

In some feasible implementation manners, to-be-detected video frame data may be first collected by using the collection module 10, and the video quality detection apparatus described in this embodiment of the present invention can simultaneously perform detection on multiple channels (that is, at least two channels) of video frame data, that is, the collection module 10 can collect video frame data from multiple media files. In a specific implementation, the video frame data described in this embodiment of the present invention may include a type, such as video frame data of a customized video or video frame data of a streaming media video, where the foregoing customized video may be specifically a video having a video source, and may include a recorded video, a produced video, or the like, and an active video quality detection manner may be used to perform quality detection on the video having a video source; the foregoing streaming media video is a video without a video source, and a passive video quality detection manner may be used to perform quality detection on the video without a video source. A type included by the foregoing customized video is merely exemplary but not exhaustive, and includes but is not limited to the foregoing type; this embodiment of the present invention sets no limitation to a detection manner of the customized video or a detection manner of the streaming media video. In a specific implementation, for a specific implementation process in which the collection module collects the video frame data, reference may be made to step S101 in the first embodiment of the video quality detection method provided in the embodiments of the present invention, and details are not repeatedly described herein.

In some feasible implementation manners, when choosing a detection manner for performing video quality detection on the video frame data, the choosing module 20 may choose, directly according to a type of the video frame data, to perform the active video quality detection or the passive video quality detection on the video frame data. Specifically, when the video frame data collected by the collection module 10 is the foregoing video frame data of the customized video, the choosing module 20 may choose to perform the active video quality detection on the video frame data; or when the video frame data collected by the collection module 10 is the foregoing video frame data of the streaming media video, the choosing module 20 may choose to perform the passive video quality detection on the video frame data. In a specific implementation, because a user has a precision requirement for video quality detection, that is, the user may determine video quality detection precision according to an actual requirement; after the video quality detection precision is determined, a corresponding video quality detection manner may be chosen with reference to the type of the video frame data. Specifically, the user may preset detection precision of video quality detection, where the detection precision may include first detection precision, second detection precision, and the like; after the video quality detection precision is set, the choosing module 20 may choose to perform the active video quality detection or the passive video quality detection on the video frame data with reference to the type of the collected video frame data. For example, when the video frame data collected by the collection module 10 is the customized video having a video source, and the preset video quality detection precision is the first detection precision, the choosing module 20 may choose to perform the active video quality detection on the foregoing customized video, and the active video quality detection may be performed, by using the detection module 30, on the video frame data collected by the collection module 10. Specifically, the detection module 30 may perform the active video quality detection on the foregoing collected video frame data according to the video processing algorithm of the active video quality detection, so as to acquire the abnormal video frame data; or when the video frame data collected by the collection module 10 is the streaming media video without a video source, and the preset video quality detection precision is the second detection precision, the choosing module 20 may choose to perform the passive video quality detection on the foregoing streaming media video, and then the passive video quality detection may be performed, by using the detection module 30, on the video frame data collected by the collection module 10. Specifically, the detection module 30 may perform the passive video quality detection on the foregoing collected video frame data according to the video processing algorithm of the passive video quality detection, so as to acquire the abnormal video frame data. In this embodiment of the present invention, a manner in which the choosing module 20 chooses, according to a preset video detection condition, to perform the active video quality detection or the passive video quality detection on the collected video frame data may be either of the two manners described above, that is, choosing directly according to the type of the video frame data, or choosing according to the type of the video frame data and the video quality detection precision, which is not limited herein.

In some feasible implementation manners, after the detection module 30 performs the video quality detection on the video frame data collected by the collection module 10, the sending module 40 may acquire the abnormal video frame data, and may record information, such as time and log information, about occurrence of a video abnormality, arrange the information into the quality detection report of the abnormal video frame data, and then send the quality detection report of the abnormal video frame data to the video frame abnormality processing module, so that the video frame abnormality processing module processes the abnormal video frame data.

The video quality detection apparatus described in this embodiment of the present invention can simultaneously collect video frame data obtained from multiple decoded media files, that is, can simultaneously perform video quality detection on the video frame data obtained from the multiple decoded media files; further choose to perform active video quality detection or passive video quality detection on the video frame data according to a type of the video frame data or preset video quality detection precision; then perform the video quality detection on the video frame data according to an active video quality detection algorithm or a passive video quality detection algorithm; and acquire abnormal video frame data. The video quality detection apparatus described in this embodiment of the present invention can simultaneously support the active video quality detection or the passive video quality detection, which enriches a video quality detection manner, enhances flexibility of video quality detection, ensures video quality detection precision, and improves user experience of video quality detection.

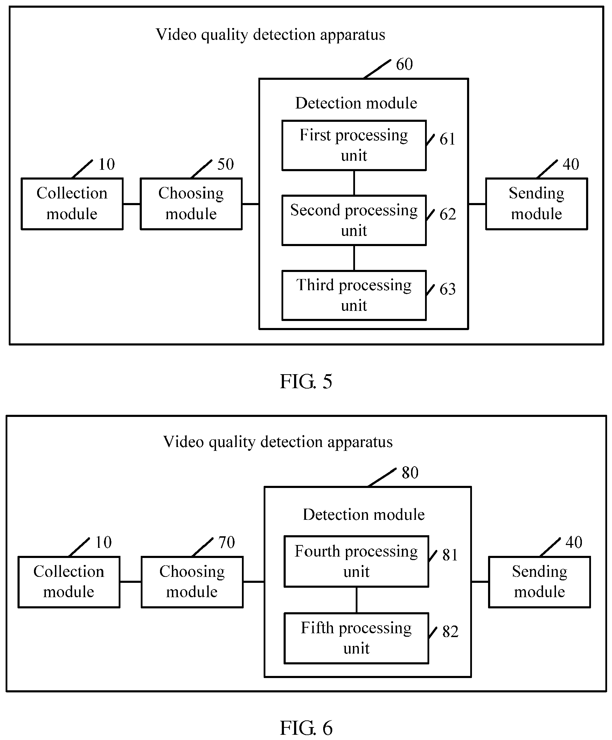

Referring to FIG. 5, FIG. 5 is a schematic structural diagram of a second embodiment of a video quality detection apparatus according to an embodiment of the present invention. The video quality detection apparatus described in this embodiment includes:
a collection module 10, configured to collect video frame data, where the video frame data comes from at least two media products;
a choosing module 50, which, when the video frame data is the video frame data of a customized video, and the predefined video quality detection precision is first detection precision, chooses to perform active video quality detection on the video frame data;
a detection module 60, configured to perform the active video quality detection on the video frame data according to a video processing algorithm of the active video quality detection; and
a sending module 40, configured to acquire abnormal video frame data, and send a quality detection report of the abnormal video frame data to a video frame abnormality processing module.

In some feasible implementation manners, the foregoing detection module 60 includes:
a first processing unit 61, configured to acquire a target image of the video frame data, and perform Gaussian blur processing on the target image and a preset reference image;
a second processing unit 62, configured to perform gray-scale processing on the target image and the reference image that are obtained from the processing performed by the first processing unit, perform synthesis processing on the target image and the reference image that are obtained from the processing, and acquire a difference image of the target image and the reference image; and
a third processing unit 63, configured to acquire a pixel whose pixel value is a first pixel value, so as to obtain abnormal video frame data.

In a specific implementation, the video quality detection apparatus described in this embodiment of the present invention may be specifically a workstation server.

In some feasible implementation manners, the collection module 10 may first collect to-be-detected video frame data, and the video quality detection apparatus described in this embodiment of the present invention can simultaneously perform detection on multiple channels (that is, at least two channels) of video frame data, that is, the collection module 10 can collect video frame data from multiple media files. In a specific implementation, the video frame data described in this embodiment of the present invention may include a type, such as video frame data of a customized video or video frame data of a streaming media video, where the foregoing customized video may be specifically a video having a video source, and may include a recorded video, a produced video, or the like, and an active video quality detection manner may be used to perform quality detection on the video having a video source; the foregoing streaming media video is a video without a video source, and a passive video quality detection manner may be used to perform quality detection on the video without a video source. A type included by the foregoing customized video is merely exemplary but not exhaustive, and includes but is not limited to the foregoing type; this embodiment of the present invention sets no limitation to a detection manner of the customized video or a detection manner of the streaming media video. In a specific implementation, for a specific implementation process in which the foregoing collection module collects the video frame data, reference may be made to step S201 in the first embodiment of the video quality detection method provided in the embodiments of the present invention, and details are not repeatedly described herein.

In some feasible implementation manners, when choosing a detection manner for performing video quality detection on the video frame data, the choosing module 50 may choose, according to a type of the video frame data, to perform the active video quality detection on the video frame data directly. Specifically, when the video frame data collected by the collection module 10 is the foregoing video frame data of the customized video, the choosing module 50 may choose to perform the active video quality detection on the video frame data. In a specific implementation, because a user has a precision requirement for video quality detection, that is, the user may determine video quality detection precision according to an actual requirement; after the video quality detection precision is determined, a corresponding video quality detection manner may be chosen with reference to the type of the video frame data. Specifically, the user may preset detection precision of video quality detection, where the detection precision may include the first detection precision, second detection precision, and the like; after the video quality detection precision is set, the choosing module 50 may choose to perform the active video quality detection on the video frame data with reference to the type of the video frame data collected by the collection module 10. In a specific implementation, when the collected video frame data is video frame data of the customized video having a video source, and the preset video quality detection precision is the first detection precision, the choosing module 50 may choose to perform the active video quality detection on the foregoing customized video; after the choosing module 50 chooses to perform the active video quality detection on the foregoing customized video, the detection module 60 may perform the active video quality detection on the foregoing collected video frame data according to the video processing algorithm of the active video quality detection, so as to acquire the abnormal video frame data. In this embodiment of the present invention, a manner in which the foregoing choosing module 50 chooses, according to a preset video detection condition, such as the type of the video frame data or the video quality detection precision, to perform the active video quality detection on the collected video frame data may be either of the two manners described above, that is, choosing directly according to the type of the video frame data, or choosing according to the type of the video frame data and the video quality detection precision, which is not limited herein.

In this embodiment of the present invention, the video processing algorithm of the foregoing active video quality detection includes: a Gaussian blur processing algorithm, a gray-scale processing algorithm, a synthesis processing algorithm, and the like, where the foregoing processing algorithms are named according to a specific processing action, and are not specific algorithm names but a kind of processing algorithm, that is, all algorithms that can implement the Gaussian blur processing on the target image and the reference image may be referred to as the Gaussian blur processing algorithm, all algorithms that can implement the gray-scale processing on the target image and the reference image may be referred to as the gray-scale processing algorithm, all algorithms that can implement the synthesis processing on the target image and the reference image may be referred to as the synthesis processing algorithm, and so on.

In some feasible implementation manners, when performing the active video quality detection on the collected video frame data, the detection module 60 may first acquire the target image of the video frame data by using the first processing unit 61, and perform the Gaussian blur processing on the foregoing target image and the preset reference image, where the foregoing target image may be specifically a to-be-detected image in the foregoing video frame data. Specifically, in this embodiment of the present invention, before quality detection is performed on the target image, the reference image may be further created first, that is, after the video frame data is collected, a standard reference source may be created according to the collected video frame data, so as to obtain the reference image, and then the active video quality detection may be performed on the collected video frame data according to the foregoing reference image. In a specific implementation, for two images, of a same frame, that are collected at different moments, a difference between the images may be not perceived by human eyes observation; however, by using pixel comparison, it may be found that a difference exists in data of the two images. The Gaussian blur processing is performed on the target image and the reference image by using the first processing unit 61, which can smooth an image edge, and remove impact of zigzagging, thereby highlighting a main feature of the image. By performing the Gaussian blur processing on the target image and the reference image, a zigzag effect of an image edge can be removed, that is, edge data that has little impact on the observation by human eyes may be removed, so that detection may be further performed on the target image and the reference image to search for the abnormal video frame data. Specifically, after the first processing unit 61 performs the Gaussian blur processing on the target image and the reference image, the second processing unit 62 may perform the gray-scale processing on a target image and a reference image that are obtained from the processing performed by the first processing unit 61. Because a human visual system has a higher degree of sensitivity to brightness than that to colors, for a common video, color details do not cause a perceptible loss. Performing the gray-scale processing on the target image and the reference image by using the second processing unit 62 can remove impact of a color signal, so that a difference feature of the target image and the reference image can be better acquired, so that the abnormal video frame data is acquired. After performing the gray-scale processing on the target image and the reference image, the second processing unit 62 may perform the synthesis processing on a target image and a reference image that are obtained from the processing, acquire the difference image of the target image and the reference image, and further perform black and white binary processing on the difference image. In a specific implementation, when the pixel value of the image is greater than a threshold (that is, the preset threshold), it may be perceived by human eyes that a difference exists between the target image and the reference image; therefore, after the synthesis processing is performed on the target image and the reference image, the difference between the two images may be obtained. Specifically, an absolute value of the pixel value may be set when the difference between the two images is acquired, so that a value range of the pixel value is 0 to 255 (because a component value of an image pixel ranges from 0 to 255, the value range of the foregoing pixel value may be 0 to 255). After the difference image is acquired by performing the synthesis processing on the target image and the reference image, the black and white binary processing may be performed on the difference image. Specifically, when the pixel value of the foregoing difference image is greater than the preset threshold, the pixel value may be set to the first pixel value (that is, the pixel value may be set to a maximum value, for example, 255); otherwise, the pixel value may be set to a second pixel value (that is, the pixel value may be set to a minimum value, for example, 0), so as to better differentiate an abnormal pixel from a normal pixel. After the black and white binary processing is performed on the difference image, and the pixel value of the difference image is set to the first pixel value or the second pixel value, a pixel whose pixel value is the first pixel value may be acquired by using the processing unit 63, so as to obtain the abnormal video frame data. In a specific implementation, for a specific implementation process in which the foregoing choosing module and the detection module choose to perform the active video quality detection on the video frame data and perform the quality detection on the video frame data, reference may be made to steps S202 to S206 in the third embodiment of the video quality detection method provided in the embodiments of the present invention, and details are not repeatedly described herein.

In some feasible implementation manners, after the detection module 60 performs the video quality detection on the video frame data collected by the collection module 10, the sending module 40 may acquire the abnormal video frame data, and may record information, such as time and log information, about occurrence of a video abnormality, arrange the information into the quality detection report of the abnormal video frame data, and then send the quality detection report of the abnormal video frame data to the video frame abnormality processing module, so that the video frame abnormality processing module processes the abnormal video frame data. In a specific implementation, for a specific implementation process in which the foregoing sending module acquires and sends the quality detection report of the abnormal video frame data, reference may be made to step S207 in the third embodiment of the video quality detection method provided in the embodiments of the present invention, and details are not repeatedly described herein.

The video quality detection apparatus described in this embodiment of the present invention can simultaneously collect video frame data obtained from multiple decoded media files, that is, simultaneously perform video quality detection on the video frame data obtained from the multiple decoded media files; further choose to perform active video quality detection on the video frame data according to a type of the video frame data or preset video quality detection precision; then perform the video quality detection on the video frame data according to an active video quality detection algorithm; and acquire abnormal video frame data. This embodiment of the present invention can simultaneously support the active video quality detection or the passive video quality detection, which enriches a video quality detection manner, enhances flexibility of video quality detection, ensures video quality detection precision, and improves user experience of video quality detection.

Referring to FIG. 6, FIG. 6 is a schematic structural diagram of a third embodiment of a video quality detection apparatus according to an embodiment of the present invention. The video quality detection apparatus described in this embodiment includes:
a collection module 10, configured to collect video frame data, where the video frame data comes from at least two media products;
a choosing module 70, which, when the video frame data is video frame data of a streaming media video, and the predefined video quality detection precision is second detection precision, chooses to perform the passive video quality detection on the video frame data;
a detection module 80, configured to perform the passive video quality detection on the video frame data according to a video processing algorithm of the passive video quality detection; and
a sending module 40, configured to acquire abnormal video frame data, and send a quality detection report of the abnormal video frame data to a video frame abnormality processing module.

In some feasible implementation manners, the foregoing detection module 80 includes:
a fourth processing unit 81, configured to perform binary processing on a video image of the video frame data according to the binary processing algorithm, perform marginalization processing on the video image of the video frame data according to the marginalization processing algorithm, and acquire a main feature of an abnormal zone of the video image; and
a fifth processing unit 82, configured to extract a valid edge of the abnormal zone of the video image according to a macroblock encoding feature, and use the preset abnormal feature template to match an edge of the abnormal zone of the video image, so as to acquire the abnormal video frame data.

In a specific implementation, the video quality detection apparatus described in this embodiment of the present invention may be specifically a workstation server.

In some feasible implementation manners, to-be-detected video frame data may be first collected by using the collection module 10, and the video quality detection apparatus described in this embodiment of the present invention can simultaneously perform detection on multiple channels (that is, at least two channels) of video frame data, that is, the collection module 10 can collect video frame data from multiple media files. In a specific implementation, the video frame data described in this embodiment of the present invention may include a type, such as video frame data of a customized video or video frame data of a streaming media video, where the foregoing customized video may be specifically a video having a video source, and may include a recorded video, a produced video, or the like, and an active video quality detection manner may be used to perform quality detection on the video having a video source; the foregoing streaming media video is a video without a video source, and a passive video quality detection manner may be used to perform quality detection on the video without a video source. A type included by the foregoing customized video is merely exemplary but not exhaustive, and includes but is not limited to the foregoing type; this embodiment of the present invention sets no limitation to a detection manner of the customized video or a detection manner of the streaming media video. In a specific implementation, for a specific implementation process in which the foregoing collection module collects the to-be-detected video frame data, reference may be made to step S301 in the first embodiment of the video quality detection method provided in the embodiments of the present invention, and details are not repeatedly described herein.

In some feasible implementation manners, when choosing a detection manner for performing video quality detection on the video frame data, the choosing module 70 may choose, directly according to a type of the video frame data, to perform the active video quality detection or the passive video quality detection on the video frame data. Specifically, when the video frame data collected by the collection module 10 is the foregoing video frame data of the streaming media video, the choosing module 70 may choose to perform the passive video quality detection on the video frame data. In a specific implementation, because a user has a precision requirement for video quality detection, that is, the user may determine video quality detection precision according to an actual requirement; after the video quality detection precision is determined, a corresponding video quality detection manner may be chosen with reference to the type of the video frame data. Specifically, the user may preset detection precision of video quality detection, where the detection precision may include the first detection precision, second detection precision, and the like; after the video quality detection precision is set, the choosing module 70 may choose to perform the active video quality detection or the passive video quality detection on the video frame data with reference to the type of the video frame data collected by the collection module 10 (in this embodiment, mainly the passive video quality detection is performed on the video frame data). For example, when the video frame data collected by the collection module 10 is the streaming media video without a video source, and the preset video quality detection precision is the second detection precision, the choosing module 70 may choose to perform the passive video quality detection on the foregoing streaming media video, and then the detection module 80 may perform the video quality detection on the video frame data collected by the collection module 10. Specifically, the detection module 80 may perform the passive video quality detection on the foregoing collected video frame data according to the video processing algorithm of the passive video quality detection, so as to acquire the abnormal video frame data. In this embodiment of the present invention, a manner in which the foregoing choosing module 70 chooses, according to the type of the video frame data or the video quality detection precision, to perform the passive video quality detection on the collected video frame data may be either of the two manners described above, that is, choosing directly according to the type of the video frame data, or choosing according to the type of the video frame data and the video quality detection precision, which is not limited herein. In this embodiment of the present invention, the video processing algorithm of the foregoing passive video quality detection includes: the binary processing algorithm, the marginalization processing algorithm, macroblock encoding, and the like, where the foregoing processing algorithms are named according to a specific processing action, and are not specific algorithm names but a kind of processing algorithm, that is, all algorithms that can implement the binary processing on the video image may be referred to as the binary processing algorithm, all algorithms that can implement the marginalization processing on the video image may be referred to as the marginalization processing algorithm, and so on.

In some feasible implementation manners, when the detection module 80 performs the passive video quality detection on the video frame data collected by the collection module 10, the binary processing may first be performed on the video image of the collected video frame data by using the fourth processing unit 81 according to the binary processing algorithm, the marginalization processing may be performed on the video image of the foregoing video frame data according to the foregoing marginalization processing algorithm, and the main feature of the abnormal zone of the video image may be acquired, where the main feature of the abnormal zone of the foregoing video image includes: pixelation, artifacts, a black screen, frame freezing, and the like. This embodiment uses pixelation as an example to give a detailed description on the video quality detection method described in the embodiments of the present invention. For example, when a pixelation abnormality exists in the video image of the video frame data collected by the collection module 10, because the pixelation abnormality may be embodied into a regular square or rectangular, performing the binary and marginalization processing on the video image by using the fourth processing unit 81 can remove impact of a pixelation area, thereby highlighting a main feature of the pixelation area. After the main feature of the pixelation is highlighted by performing, by using the fourth processing unit 81, the binary processing and the marginalization processing on the video image of the video frame data collected by the collection module 10, the fifth processing unit 82 may further extract an edge of the pixelation. Specifically, it can be learnt by analyzing the macroblock encoding feature that, the edge of the pixelation may be a square or rectangular with a fixed side length, instead of an irregular shape, such as a slash, an arc, or the like, and the edge only appears on a specific row, and therefore, the fifth processing unit 82 may extract the valid edge of the abnormal zone of the video image according to the macroblock encoding feature, that is, may extract the edge of the pixelation. In a specific implementation, after extracting the valid edge of the abnormal zone of the video image by analyzing the macroblock encoding feature, the fifth processing unit 82 may use a preset abnormal feature template to match the edge of the abnormal zone of the foregoing video image, so as to acquire the abnormal video frame data. For example, because the edge of the pixelation has a regular shape, the fifth processing unit 83 may use a fixed template to perform the matching after extracting the edge of the pixelation. If a quantity of areas successfully matched with the template is greater than a specified quantity, it may be considered that pixelation exists in the video image, and then the foregoing video image in which pixelation exists may be set as an abnormal video image, and the abnormal video frame data may be obtained according to the foregoing video image. In a specific implementation, for a specific implementation process in which the foregoing choosing module and the detection module choose to perform the passive video quality detection on the video frame data and perform the quality detection on the video frame data, reference may be made to steps S302 to S304 in the third embodiment of the video quality detection method provided in the embodiments of the present invention, and details are not repeatedly described herein.

In some feasible implementation manners, after the detection module 80 performs the video quality detection on the video frame data collected by the collection module 10, the sending module 40 may acquire the abnormal video frame data, and may record information, such as time and log information, about occurrence of a video abnormality, arrange the information into the quality detection report of the abnormal video frame data, and then send the quality detection report of the abnormal video frame data to the video frame abnormality processing module, so that the video frame abnormality processing module processes the abnormal video frame data. In a specific implementation, for a specific implementation process in which the foregoing sending module acquires and sends the quality detection report of the abnormal video frame data, reference may be made to step S305 in the third embodiment of the video quality detection method provided in the embodiments of the present invention, and details are not repeatedly described herein.

The video quality detection apparatus described in this embodiment of the present invention can simultaneously collect video frame data obtained from multiple decoded media files, that is, simultaneously perform video quality detection on the video frame data obtained from the multiple decoded media files; further choose to perform passive video quality detection on the video frame data according to a type of the video frame data or preset video quality detection precision; then perform the video quality detection on the video frame data according to a passive video quality detection algorithm; and acquire abnormal video frame data. This embodiment of the present invention can support the passive video quality detection, which enhances scenario practicability of video quality detection, ensures video quality detection precision, and improves user experience of video quality detection.

A person of ordinary skill in the art may understand that all or a part of the processes of the methods in the embodiments may be implemented by a computer program instructing related hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

What is disclosed above is merely exemplary embodiments of the present invention, and certainly is not intended to limit the protection scope of the present invention. Therefore, equivalent variations made in accordance with the claims of the present invention shall fall within the scope of the present invention.

## Claims

1. A video quality detection method performed by a video quality detection apparatus, the method comprising:
• collecting video frame data, wherein the video frame data come from at least two media files (S201);
• choosing to perform an active video quality detection on the video frame data when the video frame data are video frame data of a customized video, wherein the active video quality detection is a full-reference video quality estimation method and the customized video is a video having a source video (S202);
• choosing to perform a passive video quality detection on the video frame data when the video frame data are video frame data of a streaming media video, wherein the passive video quality detection is a non-reference video quality estimation method and the streaming media video is a video having no source video,
• in case that the active video quality detection is chosen, performing the active video quality detection on the video frame data according to a video processing algorithm of the active video quality detection, wherein the performing the active video quality detection on the video frame data according to the video processing algorithm of the active video quality detection comprises:
∘ acquiring a target image of the video frame data, and performing Gaussian blur processing on the target image and a preset reference image (S203);
∘ performing gray-scale processing on the target image and the reference image that are obtained from the Gaussian blur processing such that the impact of a color signal is removed;
∘ performing synthesis processing on the target image and the reference image that are obtained from the gray-scale processing, thereby acquiring a difference image of the target image and the reference image (S204);
∘ performing black and white binary processing on the difference image, and if a pixel value of the difference image is greater than a preset threshold, setting the pixel value to a first pixel value, or if the pixel value of the difference image is not greater than the preset threshold, setting the pixel value to a second pixel value (S205); and
∘ acquiring a pixel whose pixel value is the first pixel value, so as to obtain abnormal video frame data (S206);
• in case that the passive video quality detection is chosen, performing the passive video quality detection on the video frame data according to a video processing algorithm of the passive video quality detection; and
• in case the active video quality detection is performed, sending a first quality detection report of the abnormal video frame data of the active video quality detection to a video frame abnormality processing module
• in case the passive video quality detection is performed, acquiring abnormal video frame data of the passive video quality detection based on the passive video quality detection, and sending a second quality detection report of the abnormal video frame data of the passive video quality detection to the video frame abnormality processing module (S 207).

2. A video quality detection apparatus configured to perform the method according to claim 1.

## Patentansprüche

1. Videoqualitätsdetektionsverfahren, das von einer Videoqualitätsdetektionsvorrichtung durchgeführt wird, wobei das Verfahren Folgendes umfasst:
• Sammeln von Videorahmendaten, wobei die Videorahmendaten von mindestens zwei Mediendateien kommen (S201);
• Auswählen, eine aktive Videoqualitätsdetektion an den Videorahmendaten durchzuführen, wenn die Videorahmendaten Videorahmendaten eines angepassten Videos sind, wobei die aktive Videoqualitätsdetektion ein Verfahren zur Schätzung einer Vollreferenzvideoqualität ist und das angepasste Video ein Video ist, das ein Quellvideo aufweist (S202);
• Auswählen, eine passive Videoqualitätsdetektion an den Videorahmendaten durchzuführen, wenn die Videorahmendaten Videorahmendaten eines Streamingmedienvideos sind, wobei die passive Videoqualitätsdetektion ein Verfahren zur Schätzung einer Nichtreferenzvideoqualität ist und das Streamingmedienvideo ein Video ist, das kein Quellvideo aufweist,
• in einem Fall, in dem die aktive Videoqualitätsdetektion ausgewählt wird, Durchführen der aktiven Videoqualitätsdetektion an den Videorahmendaten gemäß einem Videoverarbeitungsalgorithmus der aktiven Videoqualitätsdetektion,
wobei das Durchführen der aktiven Videoqualitätsdetektion an den Videorahmendaten gemäß dem Videoverarbeitungsalgorithmus der aktiven Videoqualitätsdetektion Folgendes umfasst:
∘ Erfassen eines Zielbildes der Videorahmendaten und Durchführen einer Gaußschen Weichzeichnerverarbeitung am Zielbild und einem voreingestellten Referenzbild (S203);
∘ Durchführen einer Grauskalenverarbeitung am Zielbild und am Referenzbild, die aus der Gaußschen Weichzeichnerverarbeitung erhalten werden, derart, dass die Auswirkung eines Farbsignals entfernt wird;
∘ Durchführen einer Syntheseverarbeitung am Zielbild und am Referenzbild, die aus der Grauskalenverarbeitung erhalten werden, dadurch Erfassen eines Differenzbildes des Zielbildes und des Referenzbildes (S204);
∘ Durchführen einer Schwarzweißbinärverarbeitung am Differenzbild und wenn ein Pixelwert des Differenzbildes größer ist als ein voreingestellter Schwellwert, Einstellen des Pixelwerts auf einen ersten Pixelwert, oder wenn der Pixelwert des Differenzbildes nicht größer ist als der voreingestellte Schwellwert, Einstellen des Pixelwerts auf einen zweiten Pixelwert (S205) und
∘ Erfassen eines Pixels, dessen Pixelwert der erste Pixelwert ist, um unnormale Videorahmendaten zu erhalten (S206);
• in einem Fall, in dem die passive Videoqualitätsdetektion ausgewählt wird, Durchführen der passiven Videoqualitätsdetektion an den Videorahmendaten gemäß einem Videoverarbeitungsalgorithmus der passiven Videoqualitätsdetektion und
• in einem Fall, in dem die aktive Videoqualitätsdetektion durchgeführt wird, Senden eines ersten Qualitätsdetektionsberichts zu den unnormalen Videorahmendaten der aktiven Videoqualitätsdetektion an ein Modul für die Verarbeitung von Videorahmenunnormalitäten
• in einem Fall, in dem die passive Videoqualitätsdetektion durchgeführt wird, Erfassen von unnormalen Videorahmendaten der passiven Videoqualitätsdetektion auf Basis der passiven Videoqualitätsdetektion und Senden eines zweiten Qualitätsdetektionsberichts zu den unnormalen Videorahmendaten der passiven Videoqualitätsdetektion an das Modul für die Verarbeitung von Videorahmenunnormalitäten (207).

2. Videoqualitätsdetektionsvorrichtung, die dazu ausgelegt ist, das Verfahren nach Anspruch 1 durchzuführen.

## Revendications

1. Procédé de détection de qualité vidéo réalisé par un appareil de détection de qualité vidéo, le procédé consistant :
• à collecter des données de trame vidéo, dans lequel les données de trame vidéo proviennent d'au moins deux fichiers multimédias (S201) ;
• à choisir d'effectuer une détection active de qualité vidéo sur les données de trame vidéo lorsque les données de trame vidéo sont des données de trame vidéo d'une vidéo personnalisée, dans lequel la détection active de qualité vidéo est un procédé d'estimation de qualité vidéo avec référence complète et la vidéo personnalisée est une vidéo ayant une vidéo source (S202) ;
• à choisir d'effectuer une détection passive de qualité vidéo sur les données de trame vidéo lorsque les données de trame vidéo sont des données de trame vidéo d'une vidéo multimédia en continu, dans lequel la détection passive de qualité vidéo est un procédé d'estimation de qualité vidéo sans référence et la vidéo multimédia en continu est une vidéo n'ayant pas de vidéo source,
• dans le cas où la détection active de qualité vidéo est choisie, à effectuer la détection active de qualité vidéo sur les données de trame vidéo en fonction d'un algorithme de traitement vidéo de détection active de qualité vidéo,
dans lequel la réalisation de la détection active de qualité vidéo sur les données de trame vidéo en fonction de l'algorithme de traitement vidéo de détection active de qualité vidéo consiste :
o à acquérir une image cible des données de trame vidéo et à effectuer un traitement de flou gaussien sur l'image cible et une image de référence prédéfinie (S203) ;
∘ à effectuer un traitement d'échelle des gris sur l'image cible et l'image de référence qui sont obtenues du traitement de flou gaussien de telle sorte que l'impact d'un signal de chrominance soit empêché ;
∘ à effectuer un traitement de synthèse sur l'image cible et l'image de référence qui sont obtenues du traitement d'échelle des gris, ce qui permet d'acquérir une image de différence de l'image cible et de l'image de référence (S204) ;
∘ à effectuer un traitement binaire en noir et blanc sur l'image de différence et, si une valeur de pixel de l'image de différence est supérieure à un seuil prédéfini, à fixer la valeur de pixel à une première valeur de pixel ou, si la valeur de pixel de l'image de différence est inférieure ou égale au seuil prédéfini, à fixer la valeur de pixel à une seconde valeur de pixel (S205) ; et
∘ à acquérir un pixel dont la valeur de pixel est la première valeur de pixel de sorte à obtenir des données de trame vidéo anormales (S206) ;
• dans le cas où la détection passive de qualité vidéo est choisie, à effectuer la détection passive de qualité vidéo sur les données de trame vidéo en fonction d'un algorithme de traitement vidéo de détection passive de qualité vidéo ; et
• dans le cas où la détection active de qualité vidéo est effectuée, à envoyer un premier rapport de détection de qualité des données de trame vidéo anormales de la détection active de qualité vidéo à un module de traitement d'anomalie de trame vidéo ;
• dans le cas où la détection passive de qualité vidéo est effectuée, à acquérir des données de trame vidéo anormales de la détection passive de qualité vidéo en se basant sur la détection passive de qualité vidéo et à envoyer un second rapport de détection de qualité des données de trame vidéo anormales de la détection passive de qualité vidéo au module de traitement d'anomalie de trame vidéo (S207).

2. Appareil de détection de qualité vidéo configuré pour réaliser le procédé selon la revendication 1.
